(19) Europäisches Patentamt
European Patent Office
Office européen des brevets

(11) Veröffentlichungsnummer: **0 154 177**
**B1**

# (12) EUROPÄISCHE PATENTSCHRIFT

(45) Veröffentlichungstag der Patentschrift: **08.11.89**

(51) Int. Cl.⁴: **C 08 F 8/32**, C 08 F 8/44

(21) Anmeldenummer: **85101168.4**

(22) Anmeldetag: **05.02.85**

(54) **Copolymere auf Basis von Maleinsäureanhydrid und alpha, beta-ungesättigten Verbindungen, ein Verfahren zu ihrer Herstellung und ihre Verwendung als Paraffininhibitoren.**

(30) Priorität: **17.02.84 DE 3405843**

(43) Veröffentlichungstag der Anmeldung: **11.09.85 Patentblatt 85/37**

(45) Bekanntmachung des Hinweises auf die Patenterteilung: **08.11.89 Patentblatt 89/45**

(84) Benannte Vertragsstaaten: **AT DE FR GB NL**

(56) Entgegenhaltungen:
**EP-A- 0 025 142**
**EP-A- 0 129 689**
**CA-A- 932 093**
**FR-A- 2 528 066**
**GB-A- 878 926**
**US-A- 3 574 575**

**CHEMICAL ABSTRACTS, Band 88, Nr. 16, 17. April 1978, Seite 30, Nr. 106208f, Columbus, Ohio, US**

(73) Patentinhaber: **BAYER AG, D-5090 Leverkusen 1 Bayerwerk (DE)**

(72) Erfinder: **Sackmann, Günter, Dr., Friedenberger Strasse 11, D-5090 Leverkusen 3 (DE)**
Erfinder: **Mazanek, Jan, Dr,, Haferkamp 2, D-5000 Koeln 80 (DE)**
Erfinder: **Oberkirch, Wolfgang, Dr., Gregor-Mendel-Strasse 8, D-5090 Leverkusen 1 (DE)**
Erfinder: **Bartl, Herbert, Dr., Eichendorffweg 10, D-5068 Odenthal (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Copolymere auf Basis von Maleinsäureanhydrid und α,β-ungesättigten Verbindungen, ein Verfahren zu ihrer Herstellung und ihre Verwendung als Paraffininhibitoren in Rohölen, Rückstandsölen und anderen paraffinhaltigen Gemischen.

Mineralöle enthalten in der Regel einen Anteil an gelösten n-Paraffinen, die bei Erniedrigung der Temperatur auskristallisieren und dadurch zur Verschlechterung der Fließeigenschaften dieser Öle führen können. Beim Transport durch Rohrleitungen kann dies zu Ablagerungen an der Wand, in besonderen Fällen (z.B. bei Stillstand einer Pipeline) sogar zu deren völligen Verstopfung führen. Auch bei der Lagerung und Weiterverarbeitung der Öle können Ausfällungen von Paraffinen zu Komplikationen führen.

Auser den klassischen Methoden der Beseitigung dieses Paraffinproblems (thermisch, mechanisch oder mit Lösungsmitteln), die sich lediglich auf die Entfernung der bereits gebildeten Ausfällungen beziehen, wurde in den letzten Jahren eine Reihe von chemischen Additiven (Paraffininhibitoren) entwickelt, die durch physikalisches Zusammenwirken mit den ausfallenden Paraffinkristallen dazu führen, daß deren Form, Größe und Adhäsionseigenschaften modifiziert werden. Die Additive wirken dabei als zusätzliche Kristallkeime und kristallisieren teilweise mit den Paraffinen aus; ein Teil ihrer Wirkung wird auch durch Dispergierung der Kristalle erklärt. Die modifizierten Kristalle neigen weniger zu Ablagerungen, sind auch kleiner und besitzen eine veränderte Kristallform. Mit Additiven versetzte Öle lassen sich noch bei Temperaturen pumpen bzw. verarbeiten, die oft mehr als 20 °C tiefer liegen als bei nicht additivierten Ölen.

Es sind einige Copolymere auf der Basis von Maleinsäureanhydrid und α,β-ungesättigten Verbindungen als Paraffininhibitoren für Rohöle bekannt. So werden in der kanadischen Patentschrift 932 093 Umsetzungsprodukte von langkettigen Alkoholen mit Copolymeren aus Maleinsäureanhydrid und α,β-ungesättigten Verbindungen und in der US 3 879 177 Copolymere von Maleinsäureanhydrid mit Vinylestern oder Vinylethern beschrieben, die als Paraffininhibitoren Verwendung finden. In der US 3 574 575 wird die Verwendung von Umsetzungsprodukten von Copolymeren aus Maleinsäureanhydrid-Styrol mit Behenylalkohol als Paraffininhibitoren für Rohöle beschrieben.

Die paraffininhibierende Wirkung der bekannten Paraffininhibitoren ist jedoch nicht ausreichend, so daß es insbesondere bei niedrigen Temperaturen zu Ausfällungen von Paraffinen und Wachsen kommt. Nachteilig ist außerdem, daß die Anwendbarkeit bestimmter bekannter Paraffininhibitoren nur auf bestimmte Rohöle beschränkt ist.

Es wurden neue Copolymere auf Basis von Maleinsäureanhydrid und α,β-ungesättigten Verbindungen gefunden, die dadurch gekennzeichnet sind, daß sie an bivalenten Struktureinheiten

A. 20 bis 95 Mol-% des Strukturelements

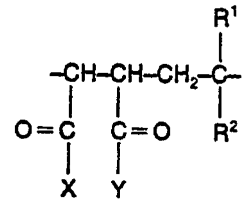

B. 0 bis 40 Mol-% des Strukturelements

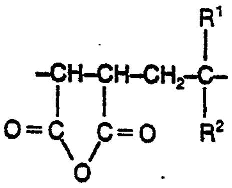

(I)

C. und 2 bis 40 Mol-% des Strukturelements

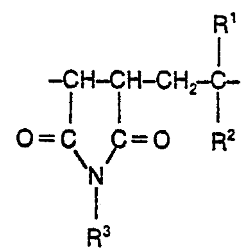

enthalten, wobei die Summe der Molprozente aus (A), (B) und (C) 100 beträgt und worin

$R^1$ und $R^2$ gleich oder verschieden sind und Wasserstoff, Alkyl, gegebenenfalls substituiertes Aryl oder die Estergruppe

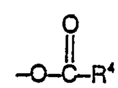

in der

$R^4$ für Alkyl mit 1 bis 20 Kohlenstoffatomen steht, bedeuten,

$R^3$ ein Alkyl-, Cycloalkyl- oder gegebenenfalls substituierten Arylrest mit 1 bis 20 Kohlenstoffatomen bedeutet,

X und Y gleich oder verschieden sind und für die Gruppe

$$-O-R^5$$

in der

$R^5$ ein Kation oder Alkyl mit 1 bis 40 Kohlenstoffatomen bedeutet,

oder für die Gruppe

$$-NHR^3$$

in der $R^3$ die obengenannte Bedeutung hat, steht,

wobei wenigstens einer der Reste X und Y für die Gruppe $-O-R^5$ steht, und

wobei in den Resten X und Y wenigstens einer der Reste mindestens 18 Kohlenstoffatome enthält.

Die erfindungsgemäßen neuen Copolymere bestehen aus den Strukturelementen A, B und C. Sie enthalten lediglich noch in an sich bekannter Weise die bei der Polymerisation durch Initiierung und Kettenabbruch entstandenen Endgruppen.

Alkyl ($R^1$ und $R^2$) steht erfindungsgemäß im allgemeinen für einen geradkettigen oder verzweigten Kohlenwasserstoffrest mit 1 bis 12 Kohlenstoffatomen. Bevorzugt ist ein Niederalkylrest mit 1 bis 6 Kohlenstoffatomen. Beispielsweise seien die folgenden Alkylreste genannt: Methyl, Ethyl, Propyl, Isopropyl, Butyl, Isobutyl, Pentyl, Isopentyl, Hexyl und Isohexyl.

Alkyl ($R^3$ und $R^4$) steht erfindungsgemäß im allgemeinen für einen geradkettigen oder verzweigten Kohlenwasserstoffrest mit 1 bis 20, bevorzugt 1 bis 18, Kohlenstoffatomen. Im einzelnen seien die folgenden Alkylreste genannt: n-Hexyl, n-Octyl, Cyclohexyl, Dodecyl, Tetradecyl, Hexadecyl, Octadecyl. Insbesondere kann $R^4$ für Methyl, Propyl, Heptadecyl stehen.

Alkyl ($R^5$) steht erfindungsgemäß im allgemeinen für einen geradkettigen oder verzweigten Kohlenwasserstoffrest mit 1 bis 40, bevorzugt 14 bis 40, Kohlenstoffatomen. Beispielsweise seien die folgenden Alkylreste genannt: Tetradecyl, Hexadecyl, Octadecyl, Eicosyl, Behenyl.

Aryl ($R^1$, $R^2$ und $R^3$) steht erfindungsgemäß für einen aromatischen Rest mit 6 bis 12 Kohlenstoffatomen. Beispielsweise seien der Phenyl- und Naphthylrest genannt. Bevorzugt ist der Phenylrest.

Substituenten der Arylreste können beispielsweise Niederalkyl ($C_1$ bis etwa $C_6$), Halogen wie Fluor, Chlor, Brom und Iod, bevorzugt Chlor, und Alkoxy ($C_1$ bis etwa $C_6$), sein.

Cycloalkyl ($R^3$) steht erfindungsgemäß im allgemeinen für einen cyclischen aliphatischen Rest mit 1 bis 20 Kohlenstoffatomen. Bevorzugte Cycloalkylreste sind Cyclopentyl und Cyclohexyl.

Ein Kation bedeutet erfindungsgemäß ein Alkali- (insbesondere Natrium und Kalium) oder ein Ammonium-Kation.

Bevorzugte erfindungsgemäße Copolymere enthalten an bivalenten Struktureinheiten

A. 60 bis 95 Mol-% des Strukturelements

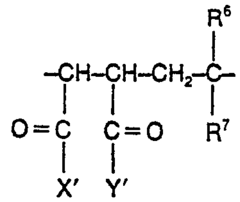

B. 0 bis 25 Mol-% des Strukturelements

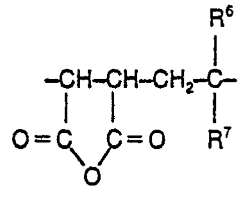

(II)

C. und 2 bis 20 Mol-% des Strukturelements

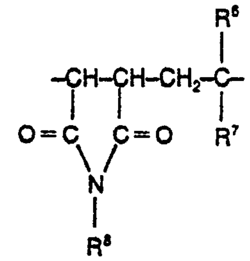

wobei die Summe der Molprozente aus (A), (B) und (C) 100 beträgt und
worin

$R^6$ und $R^7$ gleich oder verschieden sind und Wasserstoff, Niederalkyl, gegebenenfalls substituiertes Phenyl oder die Estergruppe

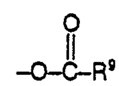

in der

$R^9$ für Alkyl mit 1 bis 18 Kohlenstoffatomen steht,
bedeuten,

$R^8$ einen Alkylrest mit 1 bis 20 Kohlenstoffatomen, Cyclopentyl, Cyclohexyl oder Phenyl bedeutet,

X' und Y' gleich oder verschieden sind und für die Gruppe

$$-O-R^{10}$$

in der

$R^{10}$ Alkyl mit 1 bis 40 Kohlenstoffatomen bedeutet,

oder für die Gruppe

$$-NHR^8$$

in der $R^8$ die obengenannte Bedeutung hat,
steht,

wobei wenigstens einer der Reste X' und Y' für die Gruppe $-OR^{10}$ steht, und

wobei in den Resten X' und Y' wenigsens einer der Rest mindestens 18 Kohlenstoffatome enthält.

Beispielsweise seien die in den folgenden beiden Tabellen aufgeführten Verbindungen genannt. Dabei sind in der 1. Tabelle solche Produkte aufgeführt, die Maleinsäureanhydrid/Styrol-Copolymerisate als Basis haben, während in der 2. Tabelle Maleinsäureanhydrid/Ethylen-Copolymerisate als Ausgangscopolymerisate für die erfindungsgemäßen Verbindungen dienen. Die Strukturelemente A, B und C entsprechen dabei jeweils den in den Formeln genannten. + bedeutet hierbei, daß das Strukturelement vorhanden ist; − bedeutet, daß das Strukturelement fehlt.

Tabelle 1

| Produkt Nr. | Strukturelemente A X | Y | B | C |
|---|---|---|---|---|
| 1 | $-OC_{22}H_{45}$ | $-OH$ | + | $-C_{18}H_{37}$ |
| 2 | $-O(C_{18}H_{37}-C_{22}-H_{45})$ | $-O(C_{18}H_{37}-C_{22}-H_{45})$ | − | $-C_{18}H_{37}$ |
| 3 | $-O(C_{18}H_{37}-C_{22}-H_{45})$ | $-O(C_{18}H_{37}-C_{22}-H_{45})$ | − | $-C_{18}H_{37}$ |
| 4 | $-O(C_{18}H_{37}-C_{22}-H_{45})$ | $-O(C_{18}H_{37}-C_{22}-H_{45})$ | + | $-C_{18}H_{37}$ |

Tabelle 2

| Produkt Nr. | Strukturelemente A X | Y | B | C |
|---|---|---|---|---|
| 1 | $-O(C_{18}H_{37}-C_{22}-H_{45})-$ | $-OH$ | + | $-C_{18}H_{37}$ |
| 2 | $-O(C_{22}H_{45})$ | $-OH$ | + | $-C_{18}H_{37}$ |
| 3 | $-O(C_{18}H_{37}-C_{22}-H_{45})$ | $-O(C_{18}H_{37}-C_{22}-H_{45})$ | + | $-C_{18}H_{37}$ |
| 4 | $-O(C_{18}H_{37}-C_{22}-H_{45})$ | $-O(C_{18}H_{37}-C_{22}-H_{45})$ | + | $-C_{18}H_{37}$ |

Die erfindungsgemäßen Copolymerisate besitzen Grundviskositätszahlen

$$[\eta] \text{ von } 0{,}10 \text{ bis } 3{,}0 \left[\frac{dl}{g}\right],$$

entsprechend mittleren Molekulargewichten zwischen ca. 3000 und ca. 3 000 000.

Es wurde auch ein Verfahren zur Herstellung der erfindungsgemäßen Copolymeren auf Basis von Maleinsäureanhydrid und α,β-ungesättigten Verbindungen gefunden, das dadurch gekennzeichnet ist, daß man ein alternierendes Copolymerisat mit dem Strukturelement

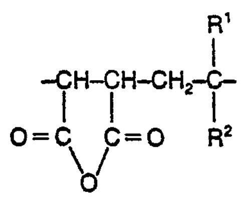

(II)

in dem

$R^1$ und $R^2$ gleich oder verschieden sind und Wasserstoff, Alkyl, gegebenenfalls substituiertes Aryl oder die Estergruppe

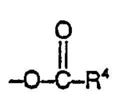

in der

$R^4$ für Alkyl mit 1 bis 20 Kohlenstoffatomen steht, bedeuten,

mit einem primären Monoalkylamin der Formel

$$R^3-NH_2 \quad (IV),$$

in der

$R^3$ ein Alkyl-, Cycloalkyl- oder gegebenenfalls substituierten Arylrest mit 1 bis 20 Kohlenstoffatomen bedeutet,

und einem oder mehreren Akoholen der Formel

$$R^{10}-OH \quad (V),$$

in der

$R^{10}$ ein Alkyl mit 1 bis 40 Kohlenstoffatomen bedeutet,

im Temperaturbereich von 80 bis 180 °C umsetzt und gegebenenfalls mit einer Base neutralisiert.

Alternierende Copolymerisate aus Maleinsäureanhydrid und α,β-ungesättigten Verbindungen sind an sich bekannt (Vollmert, Grundriß der makromolekularen Chemie; Springer-Verlag, Berlin 1962).

α,β-ungesättigte Verbindungen im Rahmen der vorliegenden Erfindung sind im allgemeinen Verbindungen der Formel

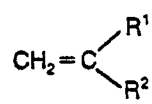

(VI),

in der

$R^1$ und $R^2$ die obengenannte Bedeutung haben.

Beispielsweise seien die folgenden α,β-ungesättigten Verbindungen genannt: Ethylen, Propylen, Isobutylen, Diisobutylen, Styrol, α-Methylstyrol, p-Methylstyrol.

Beispielsweise können die alternierenden Copolymerisate hergestellt werden, indem man Maleinsäureanhydrid mit den oben genannten α,β-ungesättigten Verbindungen im Molverhältnis von 1:10 bis 10:1, bevorzugt 1:2 bis 2:1, unter Verwendung von Radikalstartern copolymerisiert.

Als primäre Amine seien beispielsweise die folgenden genannt: n-Butylamin, n-Hexylamin, n-Octylamin, n-Dodecylamin, n-Stearylamin oder auch N,N-Dimethylaminopropylendiamin, Cyclohexylamin, Dehydroabietylamin, Anilin.

Im Rahmen der vorliegenden Erfindung werden kürzer und längerkettige Alkohole ($C_1$ bis $C_{40}$) sowie Gemische von länger- und kürzerkettigen Monoalkoholen eingesetzt. Alkohole dieser Art sind an sich bekannt.

Als kürzerkettige seien z.B. n-Butanol, n-Hexanol, n-Octanol, n-Dodecanol und als längerkettige Stearylalkohol, Behenylalkohol oder die unter der Bezeichnung Alfole bekannten Monoalkohole mit einer Kohlenstoffkettenlänge bis zu 40 C-Atomen genannt.

Der Anteil der einzelnen Strukturelemente in dem erfindungsgemäßen Copolymeren wird im wesentlichen bestimmt durch die Mengenverhältnisse der Reaktanten.

Erfindungsgemäß setzt man im allgemeinen 0,02 bis 0,4 Mol, bevorzugt 0,02 bis 0,2 Mol des primären Monoalkylamins bezogen auf 1 Mol des alternierenden Copolymerisats ein.

Erfindungsgemäß setzt man im allgemeinen 1,0 is 2,0 Mol, bevorzugt 1,5 bis 2,0 Mol, des Alkohols bezogen auf 1 Mol des alternierenden Copolymerisats ein.

Es ist auch möglich, einen oder mehrere Alkohole in dem erfindungsgemäßen Verfahren einzusetzen. So ist es möglich, einen kürzerkettigen ($C_1$–$C_{12}$) und einen längerkettigen ($C_{18}$–$C_{40}$) Monoalkohol für das erfindungsgemäße Verfahren zu verwenden. Es ist auch möglich, Mischungen verschiedener langkettiger Alkohole, wie sie in der Technik anfallen, für das erfindungsgemäße Verfahren zu verwenden.

Das erfindungsgemäße Verfahren wird im allgemeinen in Lösung, Suspension oder Schmelze durchgeführt.

Lösungsmittel für das erfindungsgemäße Verfahren sind inerte Lösungsmittel, die sich unter den erfindungsgemäßen Bedingungen nicht verändern. Als Lösungsmittel seien beispielsweise genannt: Toluol, Xylol, höhersiedende aliphatische Kohlenwasserstoffe.

Das erfindungsgemäße Verfahren wird im Temperaturbereich von 80 bis 180 °C, bevorzugt von 80 bis 140 °C, durchgeführt.

Das erfindungsgemäße Verfahren wird im allgemeinen bei Normaldruck (1000 mbar) durchgeführt. Es ist jedoch auch möglich, das Verfahren bei einem Über- oder Unterdruck (beispielsweise im Druckbereich von 0,1 bis 20 bar) durchzuführen.

Das erfindungsgemäße Verfahren wird im allgemeinen unter Inertgas durchgeführt. Als Inertgase seien beispielsweise Stickstoff, Helium und Argon genannt.

Bei der Durchführung des erfindungsgemäßen Verfahrens erfolgt am zweckmäßigsten zunächst die Umsetzung des alternierenden Copolymerisats aus Maleinsäureanhydrid und den α,β-ungesättigten Verbindungen mit den aliphatischen Monoalkoholen zu den Halb- bzw. Bisestern. Der Umsetzungsgrad der Anhydridgruppen mit den Monoalkoholen liegt zwischen 60 und 95 Mol-%. Die nicht mit Monoalkoholen umgesetzten Anhydridgruppen werden danach mit den primären aliphatischen Monoaminen entweder vollständig oder teilweise zu cyclischen Imiden zur Reaktion gebracht.

Wird nur eine teilweise Imidisierung durchgeführt, dann bleiben im Copolymermolekül noch freie Anhydridgruppen erhalten.

Befinden sich im erfindungsgemäßen Copolymeren neben den Bisesterstrukturen auch noch Halbestergruppierungen, zusammen mit freien Carboxylgruppen, dann können diese durch Umsetzung mit einer Base unter Salzbildung neutralisiert werden.

Basen sind hierbei im allgemeinen erfindungsgemäß die Alkalihydroxide (bevorzugt Natrium- und Kaliumhydroxid) und Ammoniumhydroxid.

Am zweckmäßigsten wird bei der Herstellung der erfindungsgemäßen Copolymerisate so vorgegangen, daß zunächst die Umsetzung mit den Monoalkoholen in Lösung, Suspension oder Schmelze zu den Halb- bzw. Bisestern vorgenommen wird. Zur Beschleunigung der Bisveresterung, die unter Wasserabspaltung erfolgt, können Katalysatoren, im allgemeinen Säuren wie Schwefelsäure oder p-Toluolsulfonsäure, zugesetzt werden. Zur Entfernung des Reaktionswassers arbeitet man vorzugsweise unter Verwendung eines mit Wasser nicht mischbaren Lösungsmittels, wie z.B. Toluol oder Xylol, entweder in Suspension oder Lösung und destilliert das Reaktionswasser azeotrop ab. Ist das umzusetzende Copolymere am Anfang der Umsetzung in dem Lösungsmittel unlöslich, so geht es mit zunehmendem Veresterungsgrad in Lösung, um nach Beendigung der Reaktion eine klare Lösung zu bilden.

Der bevorzugte Temperaturbereich für die Bildung der Halb- bzw. Bisester liegt im Bereich von 60 bis 180 °C, bevorzugt von 80 bis 140 °C.

Anschließend an die Veresterungsreaktion wird bevorzugt im selben Lösungsmittel die Imidisierung mit primären aliphatischen Monoaminen im Temperaturbereich von 100 bis 180 °C, bevorzugt von 110 bis 150 °C, durchgeführt, wobei ebenfalls das Reaktionswasser azeotrop entfernt wird.

Es ist jedoch auch möglich, die Imidisierungsreaktion gleichzeitig mit oder vor der Veresterungsreaktion durchzuführen. Bei gleichzeitiger Veresterung und Imidisierung bringt man das Ausgangscopolymere mit einem Gemisch aus Monoalkoholen und Monoaminen zur Reaktion.

In einer Variante des erfindungsgemäßen Verfahrens ist es möglich, außer durch polymeranaloge Umsetzung an dem alternierenden Copolymeren aus Maleinsäureanhydrid und α,β-ungesättigter Verbindung auch durch direkte Copolymerisation von α,β-ungesättigten Verbindungen, wie z.B. Ethylen, Isobutylen, Diisobutylen oder Styrol, mit den entsprechenden Halb- bzw. Bisestern von Maleinsäure oder den Maleinimiden die erfindungsgemäßen Produkte darzustellen. Hierbei

kann ebenfalls sowohl in Lösung, Suspension oder Substanz gearbeitet werden.

Die erfindungsgemäßen neuen Copolymere sind besonders als Paraffininhibitoren für paraffinhaltige Erdölprodukte, die Paraffine, Wachse, asphaltene Harze usw. enthalten, geeignet. Als paraffinhaltige Erdölprodukte im Sinne der Erfindung seien beispielsweise Rohöle, Destillationstückstände der Erdölverarbeitung oder andere paraffinhaltige Öle genannt (vgl. z.B. Compositions and Properties of Petroleum, F. Enke publishers, Stuttgart 1981, Seiten 1 bis 37).

Paraffine können hierbei geradkettige oder verzweigte Alkane mit etwa 10 bis 50 Kohlenstoffatomen sein.

Die erfindungsgemäßen Verbindungen besitzen eine sehr breite Wirksamkeit in Erdölprodukten unterschiedlichen Ursprungs und sind somit universell anwendbar.

Die Anwendungskonzentrationen der erfindungsgemäßen Paraffininhibitoren betragen im allgemeinen 10 bis 10 000 ppm bevorzugt 20 bis 5000 ppm, besonders bevorzugt 50 bis 1000 ppm, im Erdölprodukt.

Die für ein bestimmtes paraffinhaltiges Öl optimale Anwendungskonzentration kann jeweils z.B. durch Stockpunktbestimmung ermittelt werden.

Beispielsweise bei Rohölen kann die Zugabe der erfindungsgemäßen Paraffininhibitoren sowohl im Bohrloch als auch während des Transports, der Lagerung oder der Weiterverarbeitung erfolgen.

Gegenstand der Erfindung sind auch die mit den erfindungsgemäßen Paraffininhibitoren gegen Paraffinablagerungen stabilisierten Erdölprodukte.

Die erfindungsgemäßen Verbindungen verbessern das Tieftemperaturverhalten dieser Öle und bewirken hiermit ein gegenüber dem Stand der Technik verbessertes Fließverhalten. Insbesondere werden der Stockpunkt (Pour Point) und die Viskosität verbessert.

Die Verbesserung des Fließverhaltens kann z.B. durch die Bestimmung des Stockpunktes nach der ASTM-Norm Nr. 97 B (Section 6f) durch Messungen der ausgeschiedenen Paraffinmenge sowie durch Viskositätsmessungen gemessen werden. Insbesondere die erstgenannte Methode stellt ein in der Praxis stark verbreitetes Verfahren dar, das bei Screening-Untersuchungen meist den praktischen Arbeitsbedingungen angepaßt wird (z.B. Zugabe des Additivs bei 50 °C (actual pour point)).

Herstellungsbeispiel 1

101 g eines alternierenden Copolymerisats aus Maleinsäureanhydrid und Styrol mit der Grenzviskosität

$$[\eta] = 0{,}462 \left[\frac{dl}{g}\right],$$

gemessen in DMF, und 163 g eines linearen aliphatischen Monoalkoholgemisches, das zu mehr als 70% aus Behenylalkohol sowie zu je 15% aus Stearylalkohol und Eicosanol besteht, werden in einem Dreihalskolben unter einem schwachen $N_2$-Strom in 268 g Xylol suspendiert. Beim Erhitzen auf 120 °C geht die Suspension allmählich in eine klare Lösung über, und spätestens nach 24 Stunden ist die Halbesterbildung beendet. Danach gibt man noch einmal 163 g des obengenannten Alkoholgemisches, sowie 2,5 g p-Toluolsulfonsäure hinzu und erhitzt auf Rückflußtemperatur. Es wird so lange bei dieser Temperatur gerührt, bis sich über einen Wasserabscheider ca. 9 ml Reaktionswasser abgeschieden haben. Die entstandene klare Lösung enthält ein Copolymeres, das aufgrund einer IR-Analyse zu ca. 95 Mol-% Bisestergruppen und zu ca. 5 Mol-% Anhydridgruppen enthält.

Von der so erhaltenen Copolymerlösung werden 225 g mit 50 g Xylol verdünnt und anschließend mit 4,38 g Stearylamin versetzt. Dieses Reaktionsgemisch wird so lange bei seiner Rückflußtemperatur gehalten, bis sich kein Wasser mehr abspaltet.

Nach dem Abkühlen ergibt sich eine Lösung eines Copolymerisats, das zu 85–88 Mol-% Bisestergruppen, zu ca. 1–2 Mol-% Anhydridgruppen und zu ca. 10 Mol-% Imidgruppen enthält.

Herstellungsbeispiel 2

63 g eines alternierenden Copolymerisats aus Maleinsäureanhydrid und Ethylen mit einem mittleren Molekulargewicht von 8000 wird 24 Stunden lang unter Rühren mit 244,5 g eines aliphatischen Monoalkoholgemisches mit einem Gehalt von mehr als 70% Behenylalkohol zur Reaktion gebracht. Danach wird die entstandene Schmelze in 460 g Xylol gelöst und nach Zugabe von 1,4 g p-Toluolsulfonsäure wird noch 24 Stunden unter Rückflußbedingungen das Reaktionswasser abgespalten und azeotrop aus dem Reaktionsgemisch ausgekreist.

Zu 300 g dieser Lösung werden nun 16,2 g Stearylamin gegeben und so lange auf Rückflußtemperatur gehalten, bis kein Wasser mehr abgespalten wird.

Die auf diese Weise erhaltene Lösung enthält ein Copolymerisat mit einem Gehalt von ca. 68 Mol-% Bisestergruppen, ca. 2 Mol-% Anhydridgruppen und ca. 30 Mol-% Imidgruppen.

Herstellungsbeispiel 3

Ein Reaktionsgemisch, bestehend aus 101 g eines alternierenden Copolymerisats aus Maleinsäureanhydrid und Styrol mit der Grenzviskositätszahl

$$[\eta] = 0{,}462 \left[\frac{dl}{g}\right],$$

gemessen in DMF, 268 g Xylol, 326 g eines aliphatischen Monoalkohols, der zu 98 Gew.-% aus Behenylalkohol besteht, sowie 2,5 g p-Toluolsulfonsäure, wird in einem Dreihalskolben unter einem schwachen Stickstoffstrom auf Rückflußtemperatur erhitzt und so lange gerührt, bis sich ca. 9 ml

Reaktionswasser abgeschieden haben. Von der entstandenen klaren Lösung werden 225 g mit 50 g Xylol und 14,38 g Stearylamin versetzt, und das Reaktionsgemisch so lange bei seiner Rückflußtemperatur gerührt bis kein Wasser mehr abgeschieden wird. Nach dem Abkühlen erhält man die Lösung eines Copolymerisats, das zu ca. 84–87 Mol-% Bisestergruppen, zu ca. 1–2 Mol-% Anhydridgruppen und zu ca. 11–12 Mol-% Imidgruppen enthält.

Anwendungsbeispiele

Die nachstehenden Tabellen 3 und 4 geben den chemischen Aufbau der durch die Strukturelemente

I

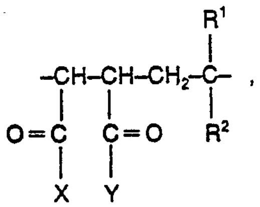

,

II

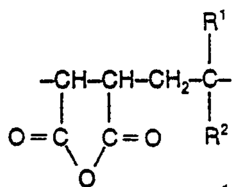

und

III

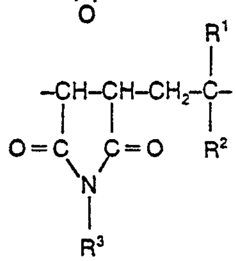

gekennzeichneten Copolymerisate wieder, die in den Anwendungsbeispielen 1–4 (s. Tab. 3–6) Rohölen verschiedener Provenienz als Paraffininhibitoren zugesetzt wurden.

\+ bedeutet hierbei, daß das Strukturelement vorhanden ist,

– daß es nicht vorhanden ist.

In Tabelle 3 steht $R^1$ für Wasserstoff und $R^2$ für Phenyl. In Tabelle 4 stehen $R^1$ und $R^2$ für Wasserstoff.

Tabelle 3

Diese Tabelle zeigt den chemischen Aufbau von 4 Copolymerisaten auf Basis von Maleinsäureanhydrid/Styrol-Copolymerisaten, wobei die Produkte 1 und 2 aus Ausgangscopolymerisaten mit dem

$$[\eta]\text{-Wert von } 1{,}48 \left[\frac{dl}{g}\right]$$

und die Produkte 3 und 4 aus Ausgangscopolymerisaten mit dem

$$[\eta]\text{-Wert } 0{,}461 \left[\frac{dl}{g}\right]$$

hergestellt wurden.

Tabelle 3

| Produkt Nr. | Strukturelemente I X | I Y | II | III $R^3$ | Zusammensetzung Mol-% I | II | III |
|---|---|---|---|---|---|---|---|
| 1 | $-OC_{22}H_{45}-$ | $-OH$ | + | $-C_{18}H_{37}$ | 47–49 | 3–5 | 45–47 |
| 2 | $-O(C_{18}H_{37}-C_{22}-H_{45})-$ | $-O(C_{18}H_{37}-C_{22}-H_{45})$ | – | $-C_{18}H_{37}$ | 90 | 0 | 10 |
| 3 | $-O(C_{18}H_{37}-C_{22}-H_{45})$ | $-O(C_{18}H_{37}-C_{22}-H_{45})$ | – | $-C_{18}H_{37}$ | 92 | 0 | 8 |
| 4 | $-O(C_{18}H_{37}-C_{22}-H_{45})$ | $-O(C_{18}H_{37}-C_{22}-H_{45})$ | + | $-C_{18}H_{37}$ | 85–88 | 1–2 | –ca. 10 |

Tabelle 4

Diese Tabelle zeigt den chemischen Aufbau von 4 Copolymerisaten auf Basis von Ethylen/Maleinsäureanhydrid-Copolymerisaten, wobei die Produkte 3 und 4 aus Ausgangscopolymerisaten mit einem mittleren Molekulargewicht 8000 und die Produkte 1 und 2 aus Ausgangscopolymerisaten mit einem mittleren Molekulargewicht von 25 000 hergestellt wurden.

Tabelle 4

| Produkt Nr. | Strukturelemente I X | Y | II | III $R^3$ | Zusammensetzung Mol-% I | II | III |
|---|---|---|---|---|---|---|---|
| 1 | $-O(C_{18}H_{37}-C_{22}-H_{45})-$ | $-OH$ | + | $-C_{18}H_{37}$ | 45 | 5 | 50 |
| 2 | $-O(C_{22}H_{45})-$ | $-OH$ | + | $-C_{18}H_{37}$ | 85 | 5 | 10 |
| 3 | $-O(C_{18}H_{37}-C_{22}-H_{45})$ | $-O(C_{18}H_{37}-C_{22}-H_{45})$ | + | $-C_{18}H_{37}$ | 68 | 2 | 30 |
| 4 | $-O(C_{18}H_{37}-C_{22}-H_{45})$ | $-O(C_{18}H_{37}-C_{22}-H_{45})$ | + | $-C_{18}H_{37}$ | 92 | 4 | 4 |

Die Erniedrigung des Stockpunktes von verschiedenen Rohölen durch Zugabe von verschiedenen Mengen der erfindungsgemäßen Verbindungen ist in Tabellen 5–8 aufgeführt. Die Messung des Stockpunktes erfolgte nach der ASTM-Norm Nr. 87B (Section 6f).

Anwendungsbeispiel 1:

Tabelle 5
Stockpunkterniedrigung im Asien-Rohöl

| Verbindung gem. Beisp. Nr. | Stockpunkt [°C] nach Zugabe von 0 ppm | 150 ppm | 250 ppm | 500 ppm |
|---|---|---|---|---|
| Tab. 3, | | | | |
| Nr. 2 | 29 | 14 | 11 | 8 |
| Nr. 3 | 29 | 20 | 17 | 11 |
| Nr. 4 | 29 | 14 | 11 | 8 |
| Tab. 4, | | | | |
| Nr. 3 | 29 | 17 | 14 | 11 |
| Nr. 4 | 29 | 14 | 14 | 8 |

Anwendungsbeispiel 2:

Tabelle 6
Stockpunkterniedrigung im Nordsee-Öl I

| Verbindung gem. Beisp. Nr. | Stockpunkt [°C] nach Zugabe von 0 ppm | 150 ppm | 250 ppm |
|---|---|---|---|
| Tab. 3, | | | |
| Nr. 1 | 20 | 8 | 2 |
| Nr. 3 | 20 | −10 | −13 |
| Nr. 4 | 20 | −10 | −13 |
| Tab. 4, | | | |
| Nr. 1 | 20 | − 7 | −13 |
| Nr. 2 | 20 | − 1 | −10 |

Anwendungsbeispiel 3:

Tabelle 7
Stockpunkterniedrigung im Norddeutschland-Öl I

| Verbindung gem. Beisp. Nr. | Stockpunkt [°C] nach Zugabe von 0 ppm | 80 ppm | 250 ppm | 500 ppm |
|---|---|---|---|---|
| Tab. 3, | | | | |
| Nr. 2 | −9 | −21 | −30 | −39 |
| Nr. 4 | −9 | −18 | −27 | −36 |
| Tab. 4, | | | | |
| Nr. 3 | −9 | −21 | −30 | −42 |

Tabelle 8
Stockpunkterniedrigung im Nordsee-Öl II

| Verbindung gem. Beisp. Nr. | Stockpunkt [°C] nach Zugabe von 0 ppm | 80 ppm | 150 ppm | 250 ppm |
|---|---|---|---|---|
| Tab. 3, | | | | |
| Nr. 2 | 23 | 8 | 5 | 2 |
| Nr. 3 | 23 | 5 | 5 | 5 |
| Nr. 4 | 23 | 8 | 5 | 2 |
| Tab. 4, | | | | |
| Nr. 2 | 23 | 11 | 2 | 2 |
| Nr. 3 | 23 | 8 | 5 | −3 |
| Nr. 4 | 23 | 5 | 2 | −7 |

Vergleichsbeispiele

Mit einem Copolymer gemäß US-Patentschrift 3 574 575 aus Maleinsäureanhydrid und Styrol mit anschließender Umsetzung mit Behenylalkohol wurden folgende Stockpunkterniedrigungen erzielt:

| Rohöl | Stockpunkt [°C] nach Zugabe von 0 | 80 | 150 | 250 ppm |
|---|---|---|---|---|
| Asien | 29 | 29 | 26 | 23 |
| Nordsee I | 20 | 17 | 17 | 11 |
| Norddeutschland | −9 | −12 | −15 | −21 |
| Nordsee II | 23 | 17 | 14 | 11 |

**Patentansprüche**

1. Copolymere auf Basis von Maleinsäureanhydrid und α,β-ungesättigten Verbindungen, dadurch gekennzeichnet, daß sie an bivalenten Struktureinheiten

A. 20 bis 95 Mol-% des Strukturelements

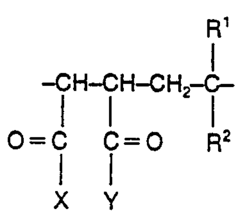

B. 0 bis 40 Mol-% des Strukturelements

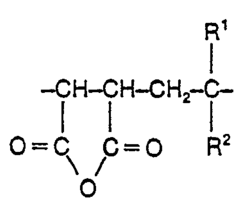

C. und 2 bis 40 Mol-% des Strukturelements

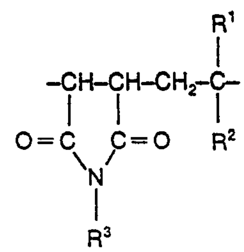

enthalten, wobei die Summe der Molprozente aus (A), (B) und (C) 100 beträgt und worin

$R^1$ und $R^2$ gleich oder verschieden sind und Wasserstoff, Alkyl, gegebenenfalls substituiertes Aryl oder die Estergruppe

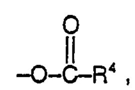

in der

$R^4$ für Alkyl mit 1 bis 20 Kohlenstoffatomen steht, bedeuten,

$R^3$ ein Alkyl-, Cycloalkyl- oder gegebenenfalls substituierten Arylrest mit 1 bis 20 Kohlenstoffatomen bedeutet,

X und Y gleich oder verschieden sind und für die Gruppe

$-O-R^5$

in der

$R^5$ ein Kation oder Alkyl mit 1 bis 40 Kohlenstoffatomen bedeutet,

oder die Gruppe

$-NHR^3$

in der $R^3$ die obengenannte Bedeutung hat, steht,

wobei wenigstens einer der Reste X und Y für die Gruppe $-O-R^5$ steht, und

wobei in den Resten X und Y wenigstens einer der Reste mindestens 18 Kohlenstoffatome enthält.

2. Copolymere nach Anspruch 1, dadurch gekennzeichnet, daß sie an bivalenten Struktureinheiten

A. 60 bis 95 Mol-% des Strukturelements

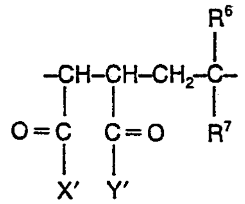

B. 0 bis 25 Mol-% des Strukturelements

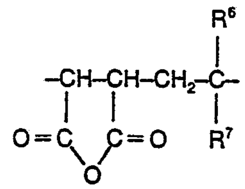

C. und 2 bis 20 Mol-% des Strukturelements

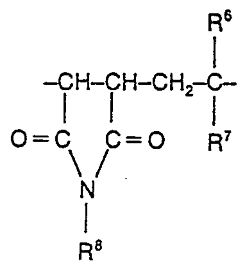

enthalten, wobei die Summe der Molprozente aus (A), (B) und (C) 100 beträgt und worin

$R^6$ und $R^7$ gleich oder verschieden sind und Wasserstoff, Niederalkyl, gegebenenfalls substituiertes Phenyl oder die Estergruppe

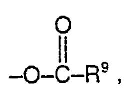

in der

$R^9$ für Alkyl mit 1 bis 18 Kohlenstoffatomen steht,

$R^8$ ein Alkylrest mit 1 bis 20 Kohlenstoffatomen, Cyclopentyl oder Cyclohexyl bedeutet,

X' und Y' gleich oder verschieden sind und für die Gruppe

$$-O-R^{10}$$

in der

$R^{10}$ Alkyl mit 1 bis 40 Kohlenstoffatomen bedeutet,

oder für die Gruppe

$$-NHR^8$$

in der $R^8$ die obengenannte Bedeutung hat, steht,

wobei wenigstens einer der Reste X' und Y' für die Gruppe $-OR^{10}$ steht, und

wobei in den Resten X' und Y' wenigstens einer der Reste mindestens 18 Kohlenstoffatome enthält.

3. Verfahren zur Herstellung von Copolymeren auf Basis von Maleinsäureanhydrid und α,β-ungesättigten Verbindungen, dadurch gekennzeichnet, daß man ein alternierendes Copolymerisat mit dem Strukturelement

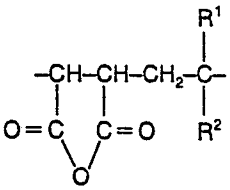

in der

$R^1$ und $R^2$ gleich oder verschieden sind und Wasserstoff, Alkyl, gegebenenfalls substituiertes Aryl oder die Estergruppe

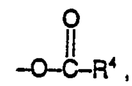

in der

$R^4$ für Alkyl mit 1 bis 20 Kohlenstoffatomen steht, bedeuten,

mit einem primären Monoalkylamin der Formel

$$R^3-NH_2$$

in der

$R^3$ ein Alkyl-, Cycloalkyl- oder gegebenenfalls substituierten Arylrest mit 1 bis 20 Kohlenstoffatomen bedeutet,.

und einem oder mehreren Alkoholen der Formel

$$R^{10}-OH$$

in der

$R^{10}$ ein Alkyl mit 1 bis 40 Kohlenstoffatomen bedeutet,

sowie unter Zusatz einer Säure,

im Temperaturbereich von 80 bis 180 °C umsetzt und gegebenenfalls mit einer Base neutralisiert.

4. Verfahren nach Anspruch 3, dadurch gekennzeichnet, daß man die Umsetzung in Lösung, Suspension oder Schmelze durchführt.

5. Verfahren nach den Ansprüchen 3 und 4, dadurch gekennzeichnet, daß man in einer ersten Reaktionsstufe die Umsetzung des alternierenden Copolymeren mit dem Monoalkohol und in einer zweiten Reaktionsstufe die Umsetzung mit dem Amin durchführt.

6. Paraffininhibitor für Rohöle, enthaltend als Wirkstoff Copolymere auf Basis von Maleinsäureanhydrid und α,β-ungesättigten Verbindungen, die an bivalenten Struktureinheiten,

A. 20 bis 95 Mol-% des Strukturelements

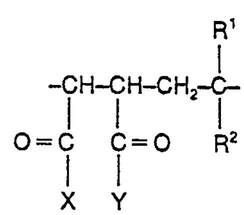

B. 0 bis 40 Mol-% des Strukturelements

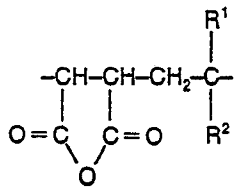

(I)

C. und 2 bis 40 Mol-% des Strukturelements

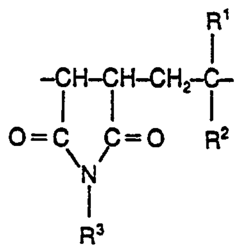

enthalten, wobei die Summe der Molprozente aus (A), (B) und (C) 100 beträgt und
worin
$R^1$ und $R^2$ gleich oder verschieden sind und Wasserstoff, Alkyl, gegebenenfalls substituiertes Aryl oder die Estergruppe

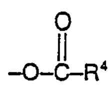,

in der
$R^4$ für Alkyl mit 1 bis 20 Kohlenstoffatomen steht,
bedeuten,
$R^3$ ein Alkyl- oder Cycloalkylrest mit 1 bis 20 Kohlenstoffatomen oder Phenylrest bedeutet,
X und Y gleich oder verschieden sind und für die Gruppe

$$-O-R^5$$

in der
$R^5$ ein Kation oder Alkyl mit 1 bis 40 Kohlenstoffatomen bedeutet,
oder für die Gruppe

$$-NHR^3$$

in der $R^3$ die obengenannte Bedeutung hat,
steht,
wobei wenigstens einer der Reste X und Y für die Gruppe $-O-R^5$ steht, und
wobei in den Resten X und Y wenigstens einer der Reste $R^5$ mehr als 18 Kohlenstoffatomen enthält.

7. Verwendung der Copolymeren gemäß Anspruch 1 zur Verhinderung der Paraffinausfällung in Rohölen.

8. Verwendung nach Anspruch 7, dadurch gekennzeichnet, daß man 10 bis 10 000 ppm des Copolymeren dem paraffinhaltigen Rohöl zusetzt.

9. Gegen Paraffinablagerungen stabilisierte Rohöle enthaltend ein Copolymer gemäß Anspruch 1.

**Claims**

1. Copolymers based on maleic anhydride and α,β-unsaturated compounds, characterised in that they contain, as bivalent structural units,

A. 20 to 95 mole% of the structural element

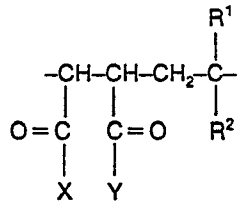

B. 0 to 40 mole% of the structural element

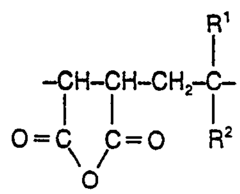

C. and 2 to 40 mole% of the structural element

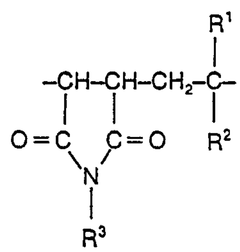

the sum of the mole percents of (A), (B) and (C) being 100, and
wherein
$R^1$ and $R^2$ are identical of different and denote hydrogen, alkyl, optionally substituted aryl or the ester group

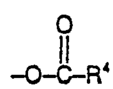

in which
$R^4$ represents alkyl with 1 to 20 carbon atoms,
$R^3$ denotes an alkyl, cycloalkyl or optionally substituted aryl radical with 1 to 20 carbon atoms, and
X and Y are identical or different and represent the group

$$-O-R^5$$

in which
$R^5$ denotes a cation or alkyl with 1 to 40 carbon atoms, or
X and Y represent the group

$$-NHR^3$$

in which
$R^3$ has the abovementioned meaning,
at least one of the radicals X and Y representing

the group $-O-R^5$, and at least one of the radicals in the radicals X and Y containing at least 18 carbon atoms.

2. Copolymers according to Claim 1, characterised in that they contain, as bivalent structural units,

A. 60 to 95 mole% of the structural element

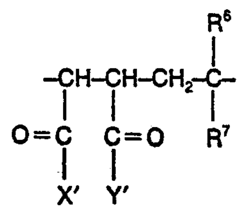

B. 0 to 25 mole% of the structural element

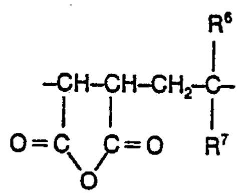

C. and 2 to 20 mole% of the structural element

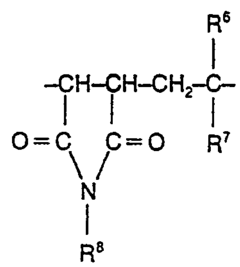

the sum of the mole percents of (A), (B) and (C) being 100, and
wherein

$R^6$ and $R^7$ are identical or different and denote hydrogen, lower alkyl, optionally substituted phenyl or the ester group

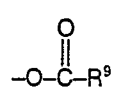

in which

$R^9$ represents alkyl with 1 to 18 carbon atoms,
$R^8$ denotes an alkyl radical with 1 to 20 carbon atoms, cyclopentyl or cyclohexyl, and
X′ and Y′ are identical or different and represent the group

$$-O-R^{10}$$

in which

$R^{10}$ denotes alkyl with 1 to 40 carbon atoms,
or
X′ and Y′ represent the group

$$-NHR^8$$

in which

$R^8$ has the abovementioned meaning,
at least one of the radicals X′ and Y′ representing the group $-OR^{10}$, and at least one of the radicals in the radicals X′ and Y′ containing at least 18 carbon atoms.

3. Process for the preparation of copolymers based on maleic anhydride and α,β-unsaturated compounds, characterised in that an alternating copolymer with the structural element

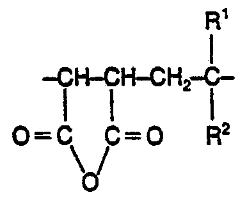

in which

$R^1$ and $R^2$ are identical or different and denote hydrogen, alkyl, optionally substituted aryl or the ester group

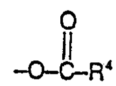

in which

$R^4$ represents alkyl with 1 to 20 carbon atoms, is reacted with a primary monoalkylamine of the formula

$$R^3-NH_2$$

in which

$R^3$ denotes an alkyl, cycloalkyl or optionally substituted aryl radical with 1 to 20 carbon atoms, and one or more alcohols of the formula

$$R^{10}-OH$$

in which

$R^{10}$ denotes alkyl with 1 to 40 carbon atoms, and in the presence of an acid, in the temperature range from 80 to 180 °C and, if appropriate, the product is neutralised with a base.

4. Process according to Claim 3, characterised in that the reaction is carried out in solution, suspension or a melt.

5. Process according to Claims 3 and 4, characterised in that the reaction of the alternating copolymer with the monoalcohol is carried out in a first reaction stage and the reaction with the amine is carried out in a second reacting stage.

6. Paraffin inhibitor for crude oils, containing as the active ingredient copolymers based on maleic anhydride and α,β-unsaturated compounds which contain, as bivalent structural units,

A. 20 to 95 mole% of the structural element

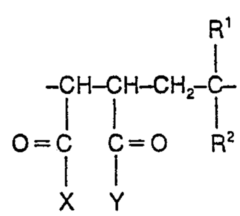

B. 0 to 40 mole% of the structural element

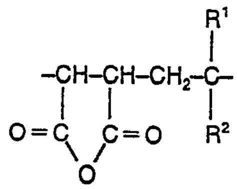

C. and 2 to 40 mole% of the structural element

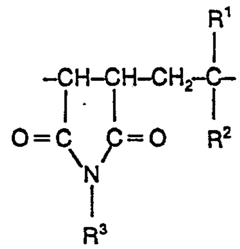

the sum of the mole percents of (A), (B) and (C) being 100, and
wherein

$R^1$ and $R^2$ are identical or different and denote hydrogen, alkyl, optionally substituted aryl or the ester group

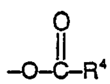

in which

$R^4$ represents alkyl with 1 to 20 carbon atoms,

$R^3$ denotes an alkyl or cycloalkyl radical with 1 to 20 carbon atoms or a phenyl radical, and

X and Y are identical or different and represent the group

$$-O-R^5$$

in which

$R^5$ denotes a cation or alkyl with 1 to 40 carbon atoms, or

X and Y represent the group

$$-NHR^3$$

in which

$R^3$ has the abovementioned meaning,
at least one of the radicals X and Y representing the group $-O-R^5$, and at least one of the radicals $R^5$ in the radicals X and Y containing more than 18 carbon atoms.

7. Use of the copolymers according to Claim 6 for preventing paraffin precipitation in mineral crude oils.

8. Use according to Claim 7, characterised in that 10 to 10 000 ppm of the copolymer are added to the paraffin-containing crude oil.

9. Crude oils stabilised against paraffin deposits, containing a copolymer according to Claim 1.

**Revendications**

1. Copolymères à base d'anhydride de l'acide maléique et de composés à insaturation en α-β, copolymères caractérisés en ce qu'ils contiennent, en motifs bivalents de structure:

A. 20 à 95 mol% des éléments de structure

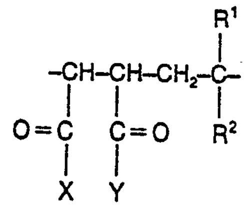

B. 0 à 40 mol% des éléments de structure

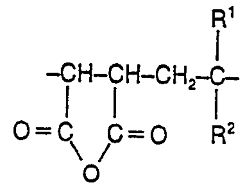

C. et 2 à 40 mol% des éléments de structure

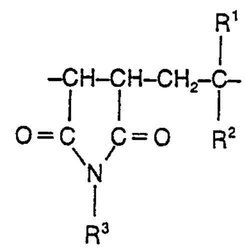

la somme des pourcentages molaires de (A), (B) et (C) valant 100, et
dans lesquels

$R^1$ et $R^2$ sont identiques ou différents et représentent chacun un atome d'hydrogène, un groupe alkyle, un groupe aryle éventuellement substitué ou le groupe ester

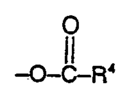

dans lequel

$R^4$ représente un groupe alkyle ayant 1 à 20 atomes de carbone,

$R^3$ représente un reste alkyle, cycloalkyle ou aryle éventuellement substitué comportant 1 à 20 atomes de carbone,

X et Y sont identiques ou différents et représentent chacun le groupe

$$-O-R^5$$

dans lequel

$R^5$ représente un cation ou un groupe alkyle ayant 1 à 40 atomes de carbone,
ou bien ils représentent le groupe

$$-NHR^3$$

dans lequel $R^3$ a le sens précité,
au moins l'un des restes X et Y représentant le groupe $-O-R^5$, et
dans les restes X et Y, au moins l'un des restes contient au moins 18 atomes de carbone.

2. Copolymères selon la revendication 1, caractérisés en ce qu'ils contiennent en motifs bivalents de structure:

A. 60 à 95 mol% des éléments de structure

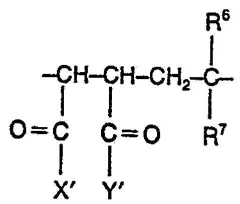

B. 0 à 25 mol% des éléments de structure

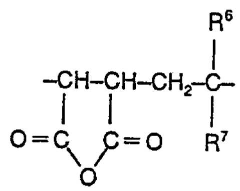

C. et 2 à 20 mol% des éléments de structure

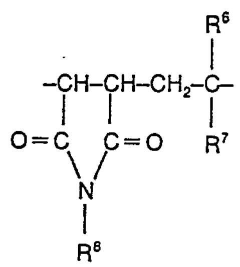

la somme des pourcentages molaires de (A), (B) et (C) valant 100, et

$R^6$ et $R^7$ sont identiques ou différents et représentent chacun un atome d'hydrogène, un groupe alkyle inférieur, un groupe phényle éventuellement substitué ou le groupe ester

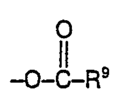

dans lequel

$R^9$ représente un groupe alkyle ayant 1 à 18 atomes de carbone,

$R^8$ représente un reste alkyle ayant 1 à 20 atomes de carbone, un reste cyclopentyle ou cyclohexyle,

X' et Y' sont identiques ou différents et représentent le groupe

$$-O-R^{10}$$

dans lequel

$R^{10}$ représente un groupe alkyle ayant 1 à 40 atomes de carbone,
ou le groupe

$$-NHR^8$$

dans lequel $R^8$ a le sens précité,
et au moins l'un des restes X' et Y' représente le groupe $-OR^{10}$, et dans les restes X' et Y', au moins l'un des restes contient au moins 18 atomes de carbone.

3. Procédé pour préparer des copolymères à base de l'anhydride de l'acide maléique et de composés à insaturations en α-β, procédé caractérisé en ce qu'on fait réagir, dans une gamme de la température allant de 80 à 180 °C, un copolymère alterné comportant l'élément de structure

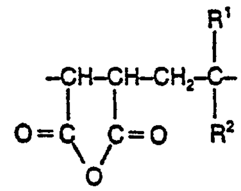

dans lequel

$R^1$ et $R^2$ sont identiques ou différents et représentent chacun un atome d'hydrogène, un groupe alkyle, un groupe aryle éventuellement substitué ou le groupe ester

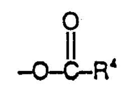

dans lequel

$R^4$ représente un groupe alkyle ayant 1 à 20 atomes de carbone,
avec une monoalkylamine primaire de formule

$$R^3-NH_2$$

dans laquelle

$R^3$ représente un reste alkyle, cycloalkyle ou un reste aryle éventuellement substitué, comportant 1 à 20 atomes de carbone,
et avec un ou plusieurs alcools de formule

$$R^{10}-OH$$

dans laquelle

$R^{10}$ représente un groupe alkyle ayant 1 à 40 atomes de carbone,
ainsi qu'avec addition d'un acide, et l'on neutralise éventuellement à l'aide d'une base.

4. Procédé selon la revendication 3, caractérisé en ce qu'on conduit la réaction en solution, en suspension ou sur une masse fondue («au fondu»).

5. Procédé selon les revendications 3 et 4, caractérisé en ce qu'on conduit, dans une première étape de réaction, la réaction du copolymère alterné avec le monoalcool et, dans une seconde étape de réaction, la réaction avec l'amine.

6. Inhibiteur (du mauvais effet) des paraffines dans des huiles brutes, cet inhibiteur contenant comme substance active des copolymères à base d'anhydride d'acide maléique et de composés insaturés en α-β et qui contiennent, en des motifs bivalents de structure:

A. 20 à 95 mol% des éléments de structure

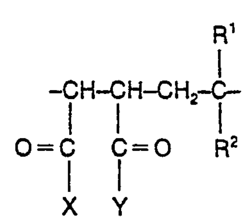

B. 0 à 40 mol% des éléments de structure

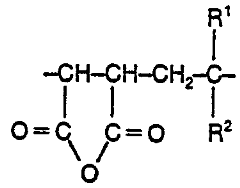

C. et 2 à 40 mol% des éléments de structure

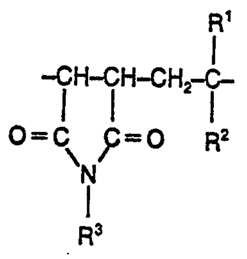

la somme des pourcentages molaires de (A), (B) et (C) valant 100, et

$R^1$ et $R^2$ sont identiques ou différents et représentent chacun un atome d'hydrogène, un groupe alkyle, un groupe aryle éventuellement substitué, ou le groupe ester

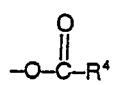

dans lequel

$R^4$ représente un groupe alkyle ayant 1 à 20 atomes de carbone,

$R^3$ représente un reste alkyle ou cycloalkyle ayant 1 à 20 atomes de carbone, ou un reste phényle,

X et Y sont identiques ou différents et représentent le groupe

$$-O-R^5$$

dans lequel

$R^5$ représente un cation ou un groupe alkyle ayant 1 à 40 atomes de carbone,

ou le groupe

$$-NHR^3$$

dans lequel $R^3$ a le sens précité,

et au moins l'un des restes X et Y représente le groupe $-O-R^5$, et dans les restes X et Y, au moins l'un des restes $R^5$ contient plus de 18 atomes de carbone.

7. Utilisation des copolymères selon la revendication 1 pour empêcher la précipitation des paraffines dans des huiles brutes.

8. Utilisation selon la revendication 7, caractérisé en ce qu'on ajoute 10 à 10 000 ppm du copolymère à l'huile brute contenant des paraffines.

9. Huiles brutes, stabilisées à l'encontre de dépôts des paraffines, ces huiles contenant un copolymère selon la revendication 1.